# EUROPEAN PATENT APPLICATION

(11) **EP 4 708 256 A1**
(43) Date of publication of application: **11.03.2026**
(21) Application number: 24198527.4
(22) Date of filing: 04.09.2024
(51) Int. Cl.: G09B 19/08

(54) **METHOD TO PREPARE A TEXT IN ORDER TO LEARN A FOREIGN LANGUAGE**

(71) Applicant: Biba, Miroslav, 90027 Bernolàkovo (SK)
(72) Inventor: Biba, Miroslav, 90027 Bernolàkovo (SK)
(74) Representative: Hinz, Claus-Dieter

(57) **Abstract**

This invention relates to a method to prepare a text in order to learn a foreign language by taking a written text in a base language the student speaks. An object of the present invention is to provide a method to learn a foreign language with fun and happiness. To achieve this object, the present invention teaches a method to learn a foreign language by taking a written text in a base language the student speaks, selecting a number of words from the text, translating the number of selected words into the foreign language and adding the translation of the selected words to the text in the base language, whereas each added translated word is to be located in the vicinity of, preferably next to, the respective selected word.

## Description

### BACKGROUND

In a more and more global society learning a foreign language is important for someones career and/or for daily live. To simplify the learning of a foreign language, US 2008/0059145 A1 discloses a method and a system for teaching a foreign language to a student by presenting a variety of texts of the same content to the student, whereas one text is written in the base language exclusively, one text is written in the foreign language exclusively and a number of texts are presented having a smaller or greater number of words translated into the foreign language to provide different leveled texts to enable the student to use the level he needs to make progress in learning the language.

However, learning a foreign language by reading a short text passage in the base language, in a version with one word in the foreign language, with two words in the foreign language and so on is boring and uninspiring, since the student has to read the same text several times. This stresses the attention of the student and reduces the ability to learn the foreign language quickly.

Based on this, an object of the present invention is to provide a method to learn a foreign language with fun and happiness.

To achieve this object, the present invention teaches a method to prepare a text in order to learn a foreign language by taking a written text in a base language the student speaks, selecting a number of words from the text, translating the number of selected words into the foreign language and adding the translation of the selected words to the text in the base language, whereas each added translated word is to be located in the vicinity of, preferably next to, the respective selected word. Thereby, the student reads the select word in the base language and the translated word at the same time. One advantage is, that the student does not have to look around to find the translation, since he can see the word in both languages in one view. A second advantage is that by reading the sentence in the base language the student understands the meaning of the complete sentence, since it is written in the base language and at the same time he understands how to use the translated word in the foreign language in the context of the story without effort.

A big advantage of this method is that by inserting the translated word in the vicinity of or next to the word in the base language, the student can read the text fluently without effort and thereby learning new vocabulary. As a result, there is no necessity to look up the meaning of the translated word, so that the student can concentrate on the story.

This all allows the student to read the text fluently and opens the opportunity to use a longer text for learning the foreign language, for example a novel, a prose text, a mystery story, a biography, a travelogue, an essay, a legend, a journalistic reportage and others.

This provides the advantage to the student to read a cracking good story and -en passant- learn new vocabulary and a new language with fun and happiness.

To use such a written text as a basis to learn the foreign language has the advantage, that it is fun to read the story, the mystery, the novel or the like and makes the student looking forward to know the next paragraph, the next chapter or the like. Thereby it keeps a high level of the students attention which facilitates the learning of the words in the foreign language.

Adding selected single words translated into the foreign language into the text has the advantage that the student is in the position to learn a word at a time and in the same moment the student does not only learn the pure vocabulary, he also gets an example on how to use this word in the context.

This is supported by the fact that the student finds the translated word in the vicinity of the word in the base language, which makes it easy for the student to link the translated word with the word in the base language.

As a result, using the present method it is easy and fun for a student to learn a foreign language.

To support the easy and fun learning of the foreign language, it is advantageous to add the pronunciation of the translated word in the vicinity of, preferably next to, the translated word. Thereby, the student learns how to pronounce the translated word at the time of learning the vocabulary. This leads to a very effective way of learning a foreign language.

Some languages use a different script compared to the base language. For example: english is written in a latin script, russian is written in cyrillic, japanese is written in a mixture from Kanji, Hiragana and Katakana and so on. Because it is helpful for someone learning a foreign language also to learn the foreign script of this language, it is recommended to add the script of the translated word into the text in the vicinity of the translated word, preferably next to the translated word, more preferably next to the pronunciation of the translated word.

In a first preferred method, the first insertion of the translated word in the text is directly after the word in the base language make the student read the word in the base language first and to read the translation directly thereafter. In this case it is easy for the student to realize, both words have the same meaning, although they are written in two different languages. Later on, for example after one, two or three appearances of the translated word, the translated word is written first and the word in the base language is written directly thereafter. Once the student already know this translated word and his meaning, this translated word is part of the context, since it appears first and the word in the base languages appearing now after the translated word acts as a kind of a reminder.

In another preferred method the translated word will be added in the vicinity of the word in the base language in two, three, four or five preferably subsequent appearances of the selected word and thereafter the word in the base language is replaced by the translated word. After some appearances of both the word in both languages the student will have learned the respective word and it is not necessary to write down both words any more. As a result this helps to keep the text short and thereby easy to read.

In yet another preferred method, the first translated word is added from the beginning of the text preferably any time the word appears and the next translated word is added in a successive part of the text preferably any time the next translated word appears and so on. This has the advantage that the student learns the words one by the other and has time to understand the meaning of the word and its use, before the next word to be learned appears. This makes it easy to remember the word memorized.

In still another preferred method first the appearance of all nouns and/or pronouns and/or verbs and/or adjectives and/or adverbs and/or prepositions and/or numerals and/or personal names will be counted and a ranking list will be established with the word with the most appearances on top. This ranking list is the basis for the number of words to be selected for translation and the word with the most appearances will be translated first. This has the advantage that the student will learn the most popular words first enabling the student to learn the foreign language quick and easy.

In a further preferred method a word with at least 5 appearances in the text in the base language is eligible to be selected as a word to be translated. This has the advantage that only words with a suitable number of appearances will be select to realize a good learning of the respective word.

### DETAILED DESCRIPTION OF EXAMPLE METHODS

An example of the method to prepare a text in order to learn a foreign language is described hereinafter more detailed. Here, student speaks fluently English and wants to learn Japanese. However, the method to learn a foreign language is suitable for any language.

In **step A** a written text in the base language the student speaks is choosen. This is preferably a self-contained text, for example a novel, a prose text, a mystery story, a fairy tale, a biography, a travelogue, an essay, a legend, a journalistic reportage or another one. Here, the well known story from Hans Christian Andersen "THE BRAVE TIN SOLDIER" is used. The story in the english version reads as set forth below:

### THE BRA VE TIN SOLDIER, a story by Hans Christian Andersen

### English only

*There were once five-and-twenty tin soldiers, who were all brothers, for they had been made out of the same old tin spoon. They shouldered arms and looked straight before them, and wore a splendid uniform, red and blue. The first thing in the world they ever heard were the words, "Tin soldiers!" uttered by a little boy, who clapped his hands with delight when the lid of the box, in which they lay, was taken off. They were given him for a birthday present, and he stood at the table to set them up. The soldiers were all exactly alike, excepting one, who had only one leg; he had been left to the last, and then there was not enough of the melted tin to finish him, so they made him to stand firmly on one leg, and this caused him to be very remarkable.*

*The table on which the tin soldiers stood, was covered with other playthings, but the most attractive to the eye was a pretty little paper castle. Through the small windows the rooms could be seen. In front of the castle a number of little trees surrounded a piece of looking-glass, which was intended to represent a transparent lake. Swans, made of wax, swam on the lake, and were reflected in it. All this was very pretty, but the prettiest of all was a tiny little lady, who stood at the open door of the castle; she, also, was made of paper, and she wore a dress of clear muslin, with a narrow blue ribbon over her shoulders just like a scarf. In front of these was fixed a glittering tinsel rose, as large as her whole face. The little lady was a dancer, and she stretched out both her arms, and raised one of her legs so high, that the tin soldier could not see it at all, and he thought that she, like himself, had only one leg. "That is the wife for me,* " *he thought; "but she is too grand, and lives in a castle, while I have only a box to live in, five-and-twenty of us altogether, that is no place for her. Still I must try and make her acquaintance.* " *Then he laid himself at full length on the table behind a snuff-box that stood upon it, so that he could peep at the little delicate lady, who continued to stand on one leg without losing her balance. When evening came, the other tin soldiers were all placed in the box, and the people of the house went to bed. Then the playthings began to have their own games together, to pay visits, to have sham fights, and to give balls. The tin soldiers rattled in their box; they wanted to get out and join the amusements, but they could not open the lid. The nut-crackers played at leap-frog, and the pencil jumped about the table. There was such a noise that the canary woke up and began to talk, and in poetry too. Only the tin soldier and the dancer remained in their places. She stood on tiptoe, with her legs stretched out, as firmly as he did on his one leg. He never took his eyes from her for even a moment. The clock struck twelve, and, with a bounce, up sprang the lid of the snuff-box; but, instead of snuff, there jumped up a little black goblin; for the snuff-box was a toy puzzle.*

*"Tin soldier,* " *said the goblin, "don't wish for what does not belong to you."*

*But the tin soldier pretended not to hear.*

*"Very well; wait till to-morrow, then,* " *said the goblin.*

*When the children came in the next morning, they placed the tin soldier in the window. Now, whether it was the goblin who did it, or the draught, is not known, but the window flew open, and out fell the tin soldier, heels over head, from the third story, into the street beneath. It was a terrible fall; for he came head downwards, his helmet and his bayonet stuck in between the flagstones, and his one leg up in the air. The servant maid and the little boy went down stairs directly to look for him; but he was nowhere to be seen, although once they nearly trod upon him. If he had called out, "Here I am,* " *it would have been all right, but he was too proud to cry out for help while he wore a uniform.*

*Presently it began to rain, and the drops fell faster and faster, till there was a heavy shower. When it was over, two boys happened to pass by, and one of them said, "Look, there is a tin soldier. He ought to have a boat to sail in. "*

*So they made a boat out of a newspaper, and placed the tin soldier in it, and sent him sailing down the gutter, while the two boys ran by the side of it, and clapped their hands. Good gracious, what large waves arose in that gutter! and how fast the stream rolled on! for the rain had been very heavy. The paper boat rocked up and down, and turned itself round sometimes so quickly that the tin soldier trembled; yet he remained firm; his countenance did not change; he looked straight before him, and shouldered his musket. Suddenly the boat shot under a bridge which formed a part of a drain, and then it was as dark as the tin soldier's box.*

*"Where am I going now?* " *thought he. "This is the black goblin's fault, I am sure. Ah, well, if the little lady were only here with me in the boat, I should not care for any darkness."*

*Suddenly there appeared a great water-rat, who lived in the drain.*

*"Have you a passport?*" *asked the rat, "give it to me at once. " But the tin soldier remained silent and held his musket tighter than ever. The boat sailed on and the rat followed it. How he did gnash his teeth and cry out to the bits of wood and straw, "Stop him, stop him; he has not paid toll, and has not shown his pass. "But the stream rushed on stronger and stronger. The tin soldier could already see daylight shining where the arch ended. Then he heard a roaring sound quite terrible enough to frighten the bravest man. At the end of the tunnel the drain fell into a large canal over a steep place, which made it as dangerous for him as a waterfall would be to us. He was too close to it to stop, so the boat rushed on, and the poor tin soldier could only hold himself as stiffly as possible, without moving an eyelid, to show that he was not afraid. The boat whirled round three or four times, and then filled with water to the very edge; nothing could save it from sinking. He now stood up to his neck in water, while deeper and deeper sank the boat, and the paper became soft and loose with the wet, till at last the water closed over the soldier's head. He thought of the elegant little dancer whom he should never see again, and the words of the song sounded in his ears- -*
*"Farewell, warrior! ever brave,*
*Drifting onward to thy grave.* " -
*Then the paper boat fell to pieces, and the soldier sank into the water and immediately afterwards was swallowed up by a great fish. Oh how dark it was inside the fish! A great deal darker than in the tunnel, and narrower too, but the tin soldier continued firm, and lay at full length shouldering his musket. The fish swam to and fro, making the most wonderful movements, but at last he became quite still. After a while, a flash of lightning seemed to pass through him, and then the daylight approached, and a voice cried out, "I declare here is the tin soldier.* " *The fish had been caught, taken to the market and sold to the cook, who took him into the kitchen and cut him open with a large knife. She picked up the soldier and held him by the waist between her finger and thumb, and carried him into the room. They were all anxious to see this wonderful soldier who had travelled about inside a fish; but he was not at all proud. They placed him on the table, and- how many curious things do happen in the world!- there he was in the very same room from the window of which he had fallen, there were the same children, the same playthings, standing on the table, and the pretty castle with the elegant little dancer at the door; she still balanced herself on one leg, and held up the other, so she was as firm as himself. It touched the tin soldier so much to see her that he almost wept tin tears, but he kept them back. He only looked at her and they both remained silent. Presently one of the little boys took up the tin soldier, and threw him into the stove. He had no reason for doing so, therefore it must have been the fault of the black goblin who lived in the snuff box. The flames lighted up the tin soldier, as he stood, the heat was very terrible, but whether it proceeded from the real fire or from the fire of love he could not tell. Then he could see that the bright colors were faded from his uniform, but whether they had been washed off during his journey or from the effects of his sorrow, no one could say. He looked at the little lady, and she looked at him. He felt himself melting away, but he still remained firm with his gun on his shoulder. Suddenly the door of the room flew open and the draught of air caught up the little dancer, shefluttered like a sylph right into the stove by the side of the tin soldier, and was instantly in flames and was gone. The tin soldier melted down into a lump, and the next morning, when the maid servant took the ashes out of the stove, shefound him in the shape of a little tin heart. But of the little dancer nothing remained but the tinsel rose, which was burnt black as a cinder.* - -

In **step B1/B2** the appearance of the nouns and the verbs and the adjectives and the adverbs appearing in the text in the base language are counted. The ranking list of the words mostly appearing is the following:
1. soldier
2. little
3. box
4. boat
5. tin

So in **step B** these five words are selected to be translated into Japanese. Due to a more clear description of the example method, only five words are selected. It is self evident that in another example more words will be selected and translated.

According to **step C,** the word "soldier" is the first selected word pout of the selected number of words and is the first word to be translated into Japanese. So "soldier" in Japanese is "heitai" in latin letters and " 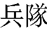 " in Japanese script. In the text in the base language the word "soldier" appears the first time in the first line and directly behind the word "soldier" the Japanese word " 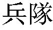 ; heitai" is inserted into the text printed in parenthesis.

According to **step D,** the word "little" is the second word to be translated into Japanese. So "little" in Japanese is "chi̅sana" in latin letters and " 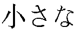 " in Japanese script. In the text in the base language the word "little" appears after at least one appearance of the word "soldier" in the third line of the second chapter and directly behind the word "little" the Japanese word " 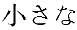 ; chi̅sana" is inserted into the text printed in parenthesis.

According to **step E** the third word "box", the fourth word "boat" and the fifth word "tin" are also translated and inserted into the text in the same manner.

In this example method in the second appearance of the english word "soldier", "little" and so on the order of the words changed. So in the second appearance the Japanese script is printed first, followed by the Japanese word in latin letters and the englisch word, both in parenthesis. In the third appearance the Japanese script is printed first again followed by the Japanese word ion latin letters in parenthesis. From here on, the english word is missing.

From the fourth appearance on, only the Japanese script is printed, without the Japanese word in latin letters and without the english word.

Here, the second selected and translated word "little, 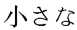 , chi̅sana" is inserted in the first appearance after the first translated word "soldier" appears in Japanese script only. Same applies to the other words to be translated and inserted.

So after all five words selected and translated are inserted into the text according to the method to learn a foreign language, "THE BRAVE TIN SOLDIER" reads as set forth below:

### THE BRAVE TIN SOLDIER, a story by Hans Christian Andersen

### English-Japanese

*There were once five-and-twenty tin soldiers (* 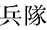 *; heitai), who were all brothers, for they had been made out of the same old tin spoon. They shouldered arms and looked straight before them, and wore a splendid uniform, red and blue. The first thing in the world they ever heard were the words, "Tin* 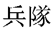 *(heitai; soldiers)!" uttered by a little boy, who clapped his hands with delight when the lid of the box, in which they lay, was taken off. They were given him for a birthday present, and he stood at the table to set them up. The* 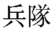 *(heitai) were all exactly alike, excepting one, who had only one leg; he had been left to the last, and then there was not enough of the melted tin to finish him, so they made him to stand firmly on one leg, and this caused him to be very remarkable.*

*The table on which the tin* 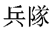 *stood, was covered with other playthings, but the most attractive to the eye was a pretty little paper castle. Through the small windows the rooms could be seen. In front of the castle a number of little (* 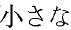 *; ch*i̅*sana) trees surrounded a piece of looking-glass, which was intended to represent a transparent lake. Swans, made of wax, swam on the lake, and were reflected in it. All this was very pretty, but the prettiest of all was a tiny* 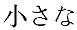 *(ch*i̅*sana; little) lady, who stood at the open door of the castle; she, also, was made of paper, and she wore a dress of clear muslin, with a narrow blue ribbon over her shoulders just like a scarf. In front of these was fixed a glittering tinsel rose, as large as her whole face. The* 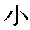 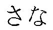 *(ch*i̅*sana) lady was a dancer, and she stretched out both her arms, and raised one of her legs so high, that the tin* 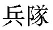 *could not see it at all, and he thought that she, like himself, had only one leg. "That is the wife for me,* " *he thought; "but she is too grand, and lives in a castle, while I have only a box to live in, five-and-twenty of us altogether, that is no place for her. Still I must try and make her acquaintance. " Then he laid himself at full length on the table behind a snuff-box that stood upon it, so that he could peep at the* 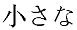 *delicate lady, who continued to stand on one leg without losing her balance. When evening came, the other tin* 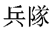 *were all placed in the box, and the people of the house went to bed. Then the playthings began to have their own games together, to pay visits, to have sham fights, and to give balls. The tin* 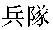 *rattled in their box (* 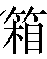 *; hako); they wanted to get out and join the amusements, but they could not open the lid. The nut-crackers played at leap-frog, and the pencil jumped about the table. There was such a noise that the canary woke up and began to talk, and in poetry too. Only the tin* 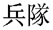 *and the dancer remained in their places. She stood on tiptoe, with her legs stretched out, as firmly as he did on his one leg. He never took his eyes from her for even a moment. The clock struck twelve, and, with a bounce, up sprang the lid of the snuff-* 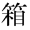 *(hako; box); but, instead of snuff, there jumped up a* 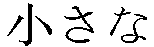 *black goblin; for the snuff-* 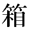 *(hako) was a toy puzzle.*

*"Tin* 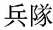 , " *said the goblin, "don't wish for what does not belong to you.* "

*But the tin* 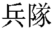 *pretended not to hear.*

*"Very well; wait till to-morrow, then,* " *said the goblin.*

*When the children came in the next morning, they placed the tin* 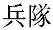 *in the window. Now, whether it was the goblin who did it, or the draught, is not known, but the window flew open, and out fell the tin* 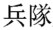 , *heels over head, from the third story, into the street beneath. It was a terrible fall; for he came head downwards, his helmet and his bayonet stuck in between the flagstones, and his one leg up in the air. The servant maid and the* 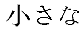 *boy went down stairs directly to look for him; but he was nowhere to be seen, although once they nearly trod upon him. If he had called out, "Here I am, " it would have been all right, but he was too proud to cry out for help while he wore a uniform.*

*Presently it began to rain, and the drops fell faster and faster, till there was a heavy shower. When it was over, two boys happened to pass by, and one of them said, "Look, there is a tin* 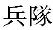 . *He ought to have a boat to sail in.* "

*So they made a boat out of a newspaper, and placed the tin* 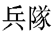 *in it, and sent him sailing down the gutter, while the two boys ran by the side of it, and clapped their hands. Good gracious, what large waves arose in that gutter! and how fast the stream rolled on! for the rain had been very heavy. The paper boat rocked up and down, and turned itself round sometimes so quickly that the tin* 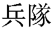 *trembled; yet he remained firm; his countenance did not change; he looked straight before him, and shouldered his musket. Suddenly the boat shot under a bridge which formed a part of a drain, and then it was as dark as the tin soldier's* 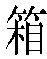 .

*"Where am I going now?* " *thought he. "This is the black goblin's fault, I am sure. Ah, well, if the* 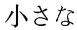 *lady were only here with me in the boat, I should not care for any darkness."*

*Suddenly there appeared a great water-rat, who lived in the drain.*

*"Have you a passport?*" *asked the rat, "give it to me at once."*

*But the tin* 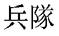 *remained silent and held his musket tighter than ever. The boat (* 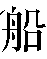 *; fine) sailed on and the ratfollowed it. How he did gnash his teeth and cry out to the bits of wood and straw, "Stop him, stop him; he has not paid toll, and has not shown his pass. "But the stream rushed on stronger and stronger. The tin* 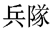 *could already see daylight shining where the arch ended. Then he heard a roaring sound quite terrible enough to frighten the bravest man. At the end of the tunnel the drain fell into a large canal over a steep place, which made it as dangerous for him as a waterfall would be to us. He was too close to it to stop, so the* 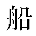 *(fune; boat) rushed on, and the poor tin* 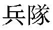 *could only hold himself as stiffly as possible, without moving an eyelid, to show that he was not afraid. The* 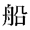 *(fune) whirled round three or four times, and then filled with water to the very edge; nothing could save it from sinking. He now stood up to his neck in water, while deeper and deeper sank the* 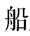 , *and the paper became soft and loose with the wet, till at last the water closed over the soldier's head. He thought of the elegant* 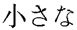 *dancer whom he should never see again, and the words of the song sounded in his ears-*

*"Farewell, warrior! ever brave, Drifting onward to thy grave.*"

*Then the paper* 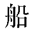 *fell to pieces, and the* 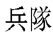 *sank into the water and immediately afterwards was swallowed up by a great fish. Oh how dark it was inside the fish! A great deal darker than in the tunnel, and narrower too, but the tin* 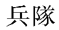 *continued firm, and lay at full length shouldering his musket. The fish swam to and fro, making the most wonderful movements, but at last he became quite still. After a while, a flash of lightning seemed to pass through him, and then the daylight approached, and a voice cried out, "I declare here is the tin* 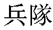 ." *The fish had been caught, taken to the market and sold to the cook, who took him into the kitchen and cut him open with a large knife. She picked up the* 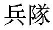 *and held him by the waist between her finger and thumb, and carried him into the room. They were all anxious to see this wonderful* 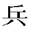 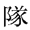 *who had travelled about inside a fish; but he was not at all proud. They placed him on the table, and-how many curious things do happen in the world!-there he was in the very same room from the window of which he had fallen, there were the same children, the same playthings, standing on the table, and the pretty castle with the elegant* 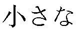 *dancer at the door; she still balanced herself on one leg, and held up the other, so she was as firm as himself It touched the tin* 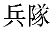 *so much to see her that he almost wept tin tears, but he kept them back. He only looked at her and they both remained silent. Presently one of the* 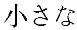 *boys took up the tin (* 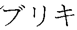 *; buriki)* 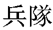 , *and threw him into the stove. He had no reason for doing so, therefore it must have been the fault of the black goblin who lived in the snuff-* 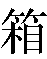 *. The flames lighted up the* 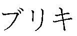 *(buriki; tin)* 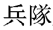 , *as he stood, the heat was very terrible, but whether it proceeded from the real fire or from the fire of love he could not tell. Then he could see that the bright colors were faded from his uniform, but whether they had been washed off during his journey or from the effects of his sorrow, no one could say. He looked at the* 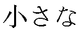 *lady, and she looked at him. He felt himself melting away, but he still remained firm with his gun on his shoulder. Suddenly the door of the room flew open and the draught of air caught up the* 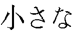 *dancer, shefluttered like a sylph right into the stove by the side of the* 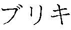 *(burika)* 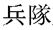 , *and was instantly in flames and was gone. The* 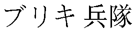 *melted down into a lump, and the next morning, when the maid servant took the ashes out of the stove, shefound him in the shape of a* 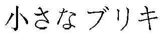 *heart. But of the* 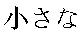 *dancer nothing remained but the tinsel rose, which was burnt black as a cinder.*

## Claims

1. Method to prepare a text in order to learn a foreign language by taking a written text, preferably a self-contained text, in a base language the student speaks, selecting a number of words from the text, translating the number of selected words into the foreign language and adding the translation of the selected words to the text in the base language, whereas each added translated word is to be located in the vicinity of, preferably next to, the respective selected word.

2. Method to prepare a text in order to learn a foreign language according to claim 1, whereas a first selected word out of the number of selected words is translated into the foreign language and then the first translated word is added to the text in the base language in the vicinity of the first and/or second and/or third and/or fourth and/or fifth appearance of the respective first selected word, and whereas after the first translated word appeared at least once in the text in the base language, a another word out of the number of selected words appearing thereafter in the text of the base language is selected and translated into the foreign language and whereas after at least one appearance of the first translated word in the text of the base language, the other translated word is then added to the text in the vicinity of the first and/or second and/ or third and/or fourth and/or fifth appearance of the respective other selected word and so on.

3. Method to prepare a text in order to learn a foreign language according to one or more of the preceding claims, whereas for selecting a number of words to be translated first count the appearance of the nouns and/or pronouns and/or the verbs and/or the adjectives and/or the adverbs and/or the prepositions and/or the numerals appearing in the text in the base language and then select the words with the most appearances as the selected words.

4. Method to prepare a text in order to learn a foreign language according to claim 3, whereas the word with the most appearances is selected as the first word to be translated, the one with the second most appearances is selected as the second word to be translated and so on.

5. Method to prepare a text in order to learn a foreign language according to claims 3 or 4, whereas a word with at least 5 appearances in the text in the base language is eligible to be selected as a word to be translated.

6. Method to prepare a text in order to learn a foreign language, preferably according to one or more of the preceding claims, comprising the following steps:
A: take a written text in a base language the student speaks, preferably a self-contained text,
B: select a number of words from the text in the base language to be translated into the foreign language,
C: translate a first selected word out of the selected number of words into the foreign language and add the first translated word to the text in the base language in the vicinity of, preferably next to, the first and/or second and/or third and/or fourth and/or fifth appearance of the respective first selected word,
D: translate a second selected word out of the selected number of words into the foreign language and after at least one appearance of the first translated word in the text in the base language, then add the second translated word to the text in the base language in the vicinity of the first and/or second and/or third and/or fourth and/or fifth appearance of the respective second selected word,
E: translate a third, fourth and so on selected word out of the selected number of words into the foreign language and conduct step D for each translated word accordingly, until all selected words out of the selected number of words are translated and added.

7. Method to prepare a text in order to learn a foreign language according to claim 6, step B comprises the following steps:
B1: count the appearance of the nouns and/or pronouns and/or the verbs and/or the adjectives and/or the adverbs and/or the prepositions and/or the numerals appearing in the text in the base language and select the words with the most appearances as the selected number of words.

8. Method to prepare a text in oder to learn a foreign language according to claim 6, step B comprises the following steps:
B2: count the appearance of the nouns and/or the verbs and/or the adjectives and/ or the adverbs and/or the prepositions and/or the numerals appearing in the text in the base language and select the word with the most appearances as the first word to be translated, the one with the second most appearances as the second word to be translated and so on.

9. Method to prepare a text in order to learn a foreign language according to claim 7 and/or 8, whereas step B comprises the following: a word with at least 5 appearances in the text in the base language is eligible to be selected as a word to be translated.

10. Method to prepare a text in order to learn a foreign language according to one or more of the preceding claims, whereas after the translated word is added to the text in the base language in the vicinity of the selected word at least once, preferably in two, three, four or five subsequent appearances of the selected word, the selected word is replaced by the translated word, preferably in all subsequent appearances of the selected word.

11. Method to prepare a text in order to learn a foreign language according to one or more of the preceding claims, whereas in addition to the translated word the pronunciation to the translated word is added in the vicinity of, preferably next to, the translated word.

12. Method to prepare a text in order to learn a foreign language according to one or more of the preceding claims, whereas the script of the translated word is added into the text in the vicinity of the translated word, preferably next to the translated word, more preferably next to the pronunciation of the translated word.

13. Text to learn a foreign language prepared with a method according to one or more of the preceding claims.
